Europäisches Patentamt

European Patent Office

Office européen des brevets

(19)

(11) Veröffentlichungsnummer : **0 537 227 B1**

(12) # EUROPÄISCHE PATENTSCHRIFT

(45) Veröffentlichungstag der Patentschrift :
26.04.95 Patentblatt 95/17

(51) Int. Cl.⁶ : **F02P 5/04**

(21) Anmeldenummer : **91912097.2**

(22) Anmeldetag : **29.06.91**

(86) Internationale Anmeldenummer :
**PCT/DE91/00541**

(87) Internationale Veröffentlichungsnummer :
**WO 92/01152 23.01.92 Gazette 92/03**

(54) **EINRICHTUNG ZUM VERHINDERN DES RUCKELNS BEI KRAFTFAHRZEUGEN.**

(30) Priorität : **05.07.90 DE 4021440**

(43) Veröffentlichungstag der Anmeldung :
**21.04.93 Patentblatt 93/16**

(45) Bekanntmachung des Hinweises auf die
Patenterteilung :
**26.04.95 Patentblatt 95/17**

(84) Benannte Vertragsstaaten :
**DE FR GB IT**

(56) Entgegenhaltungen :
**EP-A- 0 109 545**
**EP-A- 0 337 491**

(56) Entgegenhaltungen :
**US-A- 4 699 105**
**PATENT ABSTRACT OF JAPAN, vol. 13, no.**
**373 (M-861) 18 August 1989 ; & JP-A-01 125 565**
**PATENT ABSTRACT OF JAPAN, vol. 7, no. 283**
**(M-263) 16 December 1983 ; & JP-A-58 158 371**

(73) Patentinhaber : **ROBERT BOSCH GMBH**
**Postfach 30 02 20**
**D-70442 Stuttgart (DE)**

(72) Erfinder : **DENZ, Helmut**
**Friedrich-Ebert-Strasse 59**
**D-7000 Stuttgart 10 (DE)**
Erfinder : **WILD, Ernst**
**Wernerstrasse 20/6**
**D-7141 Oberriexingen (DE)**

## Beschreibung

Stand der Technik

Die Erfindung betrifft eine Einrichtung zum Verhindern des Ruckelns bei Kraftfahrzeugen gemäß dem Oberbegriff des Anspruchs 1.

Ruckelnde Bewegungen des Fahrzeugs, insbesondere Longitudinalschwingungen in Fahrtrichtung der Karosserie, können sowohl im Stationärbetrieb, das heißt bei konstanter Drehzahl, als auch besonders bei Beschleunigungs- und Bremsvorgängen, das heißt bei Drehzahländerungen, auftreten. Bei einer bekannten Einrichtung (DE-OS 38 37 876) wird eine Zündzeitpunkteinstelleinrichtung für Brennkraftmaschinen angegeben, die eine solche Vibration der Fahrzeugkarossiere bei Beschleunigungen unterdrückt. Dies wird dadurch erreicht, daß eine erste Zündzeitpunkt-Korrekturgröße, die von der Änderung der Drehzahländerung der Maschine bestimmt ist und eine zweite Zündzeit-Punkt-Korrekturgröße, die auf der Basis des Maschinenlastzustandes bestimmt ist, gebildet werden und ein Grund-Zündzeit punkt nach Maßgabe der ersten und der zweiten Zündzeitpunkt-Korrekturgröße korrigiert wird, wenn das Fahrzeug beschleunigt wird. Die bekannte Vorrichtung ist zur Unterdrückung von Vibrationen der Fahrzeugkarosserie bei Beschleunigungen ausgelegt. Ruckelnde Bewegungen können jedoch auch bei stationärem Betrieb, beispielsweise bei kaltem Motor, auftreten. Die Einrichtung ist zudem relativ aufwendig ausgelegt.

Eine weitere, bekannte Einrichtung zur Unterdrückung von Longitudinalschwingungen eines Fahrzeugs (EP 0 315 172 A2) enthält einen mechanischen Beschleunigungsaufnehmer, der direkt auf Fahrzeuglongitudinalschwingungen anspricht und dessen Ausgangssignal einer Drehmomentregelung zugeführt wird, die durch Änderung des Zündwinkels beeinflußt wird. Eine mechanische Messung der Fahrzeugschwingungen durch einen Beschleunigungsaufnehmer ist aufwendig, teuer und relativ störanfällig.

Vorteile der Erfindung

Erfindungsgemäß werden Drehzahldifferenzwerte bezogen auf bestimmte, aufeinanderfolgende Zeitsegmente bzw. Werte der zeitlichen Ableitung der Drehzahl gebildet. Die Drehzahldifferenzwerte adressieren eine Kennlinie, worüber ein Wert für einen Korrekturzündwinkel gebildet wird. Dieser Korrekturzündwinkel wird zum Zündwinkelvorsteuerwert bzw. zum Sollzündwinkel addiert. Der Korrekturzündwinkel wird in Abhängigkeit der Größe und des Betrags der Drehzahldifferenzwerte so gebildet, daß eine zur Ruckelschwingung gegenphasige Drehmomentkorrektur erfolgt. Die Wirkung einer solchen Einrichtung entspricht der Wirkung eines D-Anteils in einem Regelkreis zur Verhinderung des Ruckelns.

Diese Zündwinkel-Gegenkopplung erfolgt immer in der richtigen Phasenlage, das heißt gegenphasig, da die Momentensteuerung durch den Zündwinkel ohne Verzögerungszeit erfolgt. Voraussetzung dafür ist die zündungssynchrone Berechnung und Ausgabe des jeweiligen Korrekturzündwinkels.

Da Aufnehmer zur Drehzahlermittlung und Einrichtungen zur Veränderung des Zündwinkels ohnehin in üblichen Motorsteuereinrichtungen vorhanden sind, kann die erfindungsgemäße Einrichtung zur Verhinderung des Ruckelns im wesentlichen schaltungstechnisch im elektronischen Teil mit nur geringem Mehraufwand durchgeführt werden.

Zeichnung

Es zeigen:

| | |
|---|---|
| Fig. 1 | einen sinusförmigen Verlauf einer Ruckelschwingung bei stationärem Betrieb mit aufeinanderfolgenden Zeitsegmenten, über die eine Drehzahldifferenz (Dn) gebildet wird, |
| Fig. 2 | den zeitlichen Verlauf der gemäß Fig. 1 gebildeten Drehzahldifferenzwerte (Dn), |
| Fig. 3 | eine Kennlinie (DWARA über Dn) zur Ermittlung des Korrekturzündwinkels DWARA, |
| Fig. 4 | den zeitlichen Verlauf des ermittelten Korrekturzündwinkels DWARA, |
| Fig. 5 | ein Additionsglied für die Summierung des von der Motorsteuerung vorgegebenen Zündwinkelvorsteuerwerts bzw. Sollzündwinkels $\alpha zs$ mit dem Korrekturzündwinkel DWARA zum aktuellen Zündwinkel $\alpha z$, |
| Fig. 6 | ein Drehzahldiagramm über der Zeit bei hochlaufender Drehzahl mit überlagerter Ruckelschwingung, |
| Fig. 7, 8 und 9 | Darstellungen zur Ermittlung des zeitlichen Verlaufs des Korrekturzündwinkels DWARA (Fig. 9), ohne dynamische Korrektur mit einer systembedingten, generellen Spätverschiebung des Zündwinkels, |
| Fig. 10 bis 13 | Darstellungen entsprechend der Fig. 7 bis 9 zur Ermittlung des zeitabhängigen Verlaufs |

des Korrekturzündwinkels DWARA mit einer Maßnahme zur dynamischen Korrektur zur Verhinderung einer generellen Spätverschiebung,

Fig. 14      eine Darstellung, die den üblichen Verlauf des Drehmoments (Md) über den Zündwinkel αz mit einem Maximum zeigt,

Fig. 15      eine Darstellung einer Kurve in einem Feld Last (tL) über der Drehzahl (n), wobei in einem unteren Lastbereich (U) positive und negative Korrekturzündwinkel gemäß einer Kennlinie nach

Fig. 16      zulässig sind und in einem oberen Lastbereich (O) negative Korrekturzündwinkel gemäß Kennlinie nach

Fig. 17      zulässig sind,

Fig. 18      ein Blockschaltbild einer Einrichtung zum Verhindern des Ruckelns mit einem Hochpaßfilter.

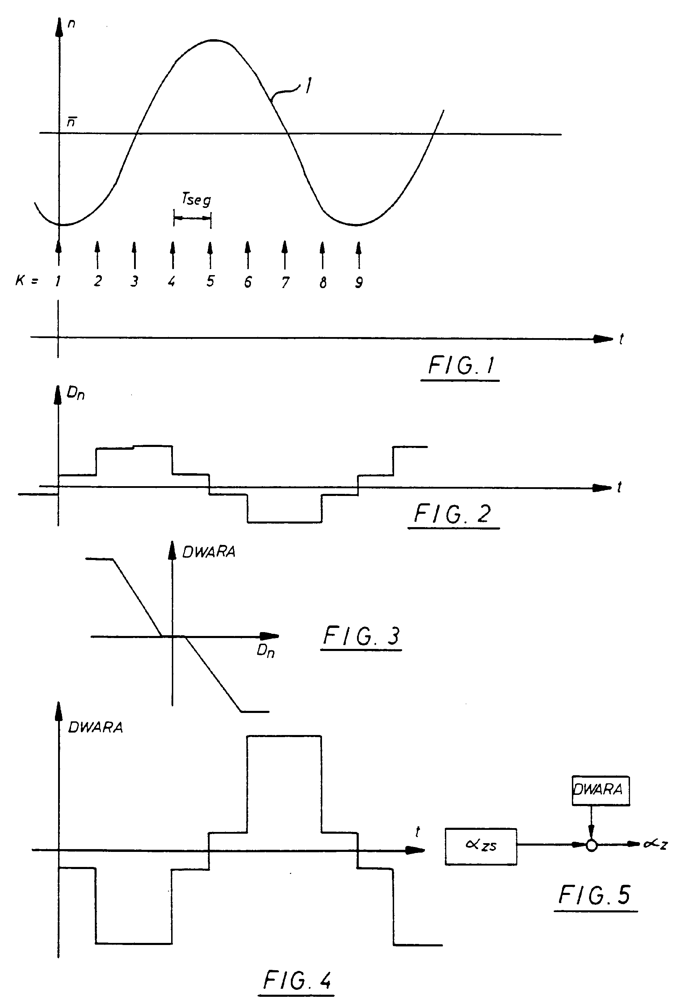

In Fig. 1 ist die Drehzahl n über die Zeit t für eine Ruckelschwingung 1 als Sinusschwingung aufgetragen. Als gemittelte Drehzahl $\bar{n}$ ergibt sich eine horizontale Gerade, das heißt, es wird ein stationärer Betriebszustand ohne generelle Beschleunigung betrachtet. Die Pfeile K = 1 bis 9 stellen Beginn und Ende von Zeitsegmenten Tseg dar, wobei die Drehzahlerfassung über jeweils eine Zeitsegmentdauer Tseg erfolgt.

In Fig. 2 ist der zeitliche Verlauf der Drehzahldifferenz Dn als Stufenfunktion dargestellt, wobei ansteigende Drehzahlwerte zu positiven Drehzahldifferenzwerten Dn und fallende Drehzahlen n zu negativen Drehzahldifferenzwerten führen nach der Beziehung

$$Dn(k) = n(k) - n(k - 1).$$

Die Drehzahldifferenzwerte Dn adressieren eine Kennlinie DWARA (Differenz-Winkel-Anti-Ruckelfunktion-Aktiv) über der Drehzahldifferenz Dn gemäß Fig. 3.

Dadurch ergibt sich eine Spiegelung und Vertikalvergrößerung der Funktion nach Fig. 2 zu der in Fig. 4 dargestellten Funktion, die einen Korrekturzündwinkel DWARA über der Zeit darstellt.

Gemäß Fig. 5 wird dieser Korrekturzündwinkel DWARA mit einem üblichen Zündwinkelvorsteuerwert bzw. Sollzündwinkel αzS aus einem Zündwinkelkennfeld für einen aktuellen Zündwinkel αz addiert.

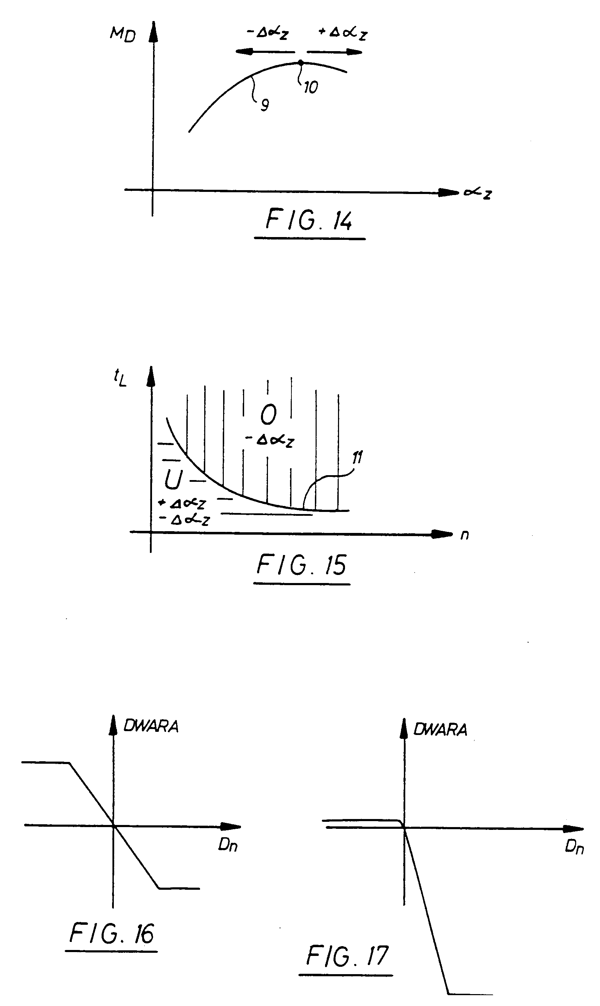

Bei einem stationären Betrieb (keine Beschleunigung) des Fahrzeugs und auftretenden Ruckelschwingungen werden diese über die ermittelten Drehzahldifferenzwerte Dn erfaßt und daraus ein gegenphasig verlaufender Korrekturzündwinkel DWARA gemäß Fig. 4 ermittelt und mit dem Sollzündwinkel summiert. Bekanntlich ist eine Veränderung des Zündwinkels auch mit einer Veränderung des von der Brennkraftmaschine abgegebenen Drehmoments verbunden (siehe z.B. Fig. 14), so daß hier eine Gegenkopplung zu den Drehzahlschwankungen der Ruckelschwingung durch genau gegenphasige Drehmomentkorrektur über eine Zündwinkelveränderung erfolgt und damit die Ruckelschwingungen weitgehend eliminiert werden. Die Wirkung entspricht einem D-Anteil im Regelkreis zur Ausregelung der Ruckelschwingungen. Die Zündwinkelgegenkopplung erfolgt immer in der richtigen Phasenlage, da die Momentensteuerung durch den Zündwinkel praktisch ohne Verzögerungszeit erfolgt, wobei vorausgesetzt ist, daß die Berechnung der Zündwinkelkorrektur zündungssynchron erfolgt.

In der Kennlinie nach Fig. 3 ist im mittleren Bereich eine Unempfindlichkeitszone ausgewiesen, so daß hier (bei Bedarf) der D-Anteil des Korrekturzündwinkels DWARA bei geringen oder nicht vorhandenen Drehzahlschwankungen eliminiert wird.

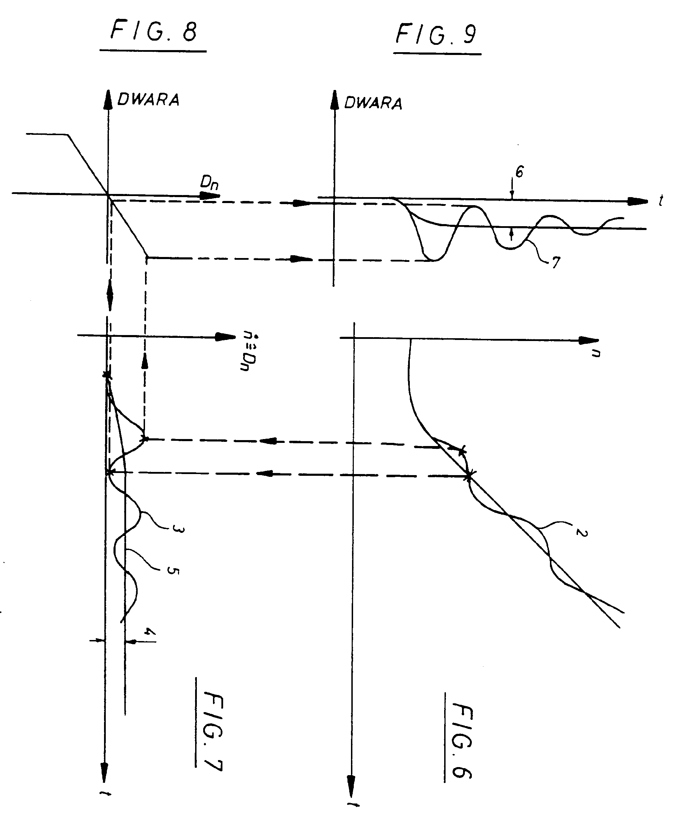

Fig. 6 entspricht Fig. 1, nur daß in Fig. 6 kein stationärer Betrieb mehr betrachtet wird, sondern ein beschleunigter Betrieb mit Drehzahlhochlauf dargestellt ist, der wiederum durch eine etwa sinusförmig verlaufende Ruckelschwingung 2 überlagert ist.

In Fig. 7 ist die zeitliche Ableitung n bzw. dn/dt dargestellt, was der (stufenförmigen) Darstellung der Drehzahldifferenzwerte Dn entspricht.

Der konstante Drehzahlhochlauf führt dazu, daß die wiederum etwa sinusförmig verlaufende Kurve 3 entsprechend dn/dt um einen positiven Betrag 4 gegenüber der Nullinie nach oben versetzt ist und um die dadurch gebildete horizontale Linie 5 symmetrisch verläuft.

Wie in Fig. 8 dargestellt, wird durch den positiven Versatz um den Betrag 4 nur eine Adressierung des unteren Kennlinienastes erhalten, so daß auch die ermittelten Zündwinkelkorrekturwerte DWARA gemäß Fig. 9 einen generellen Versatz 6 zu einem späten Zündwinkel hin enthalten, um den die Kurve 7 symmetrisch verläuft. Dieser generelle Zündwinkelversatz 6 hin zur Spätzündung führt üblicherweise zu einer Drehmomentreduzierung, so daß für diesen Fall ein generell geringeres Drehmoment bei der Fahrzeugbeschleunigung zur Verfügung steht.

Eine mögliche Lösung dieses Problems könnte darin liegen, daß bei gewollter Beschleunigung mit einem Drehzahlanstieg (oder Drehzahlabfall) eine Zündwinkelkorrektur über die erfindungsgemäße Einrichtung zum Verhindern des Ruckelns verboten würde, so daß keine zu späten Zündwinkel akzeptiert werden müßten, in diesem Fall jedoch auch keine Ruckeldämpfung möglich wäre.

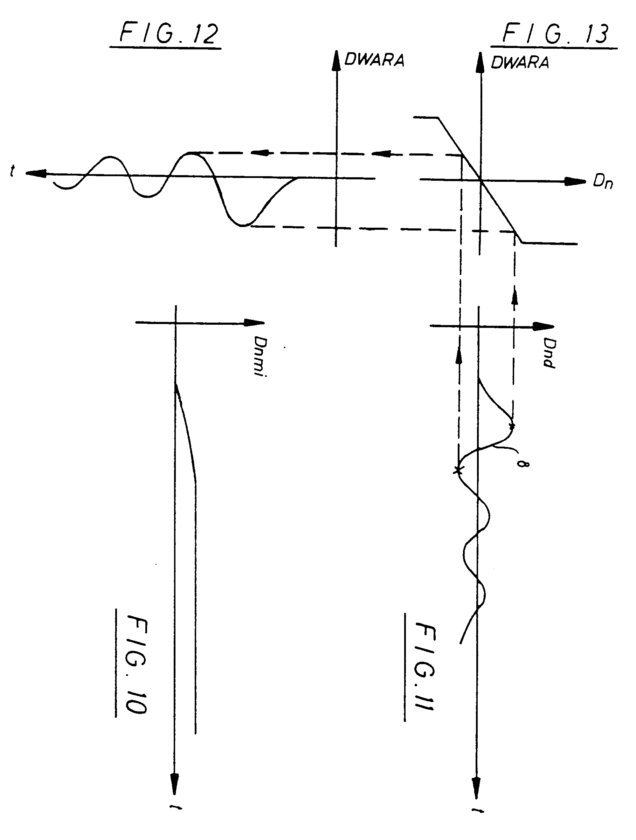

Als bessere Lösung wird nachfolgend in Verbindung mit den Fig. 10 bis 13 eine modifizierte Einrichtung beschrieben, bei der die Gegenkopplung zur Verhinderung des Ruckelns auch bei ruckelndem Drehzahlhochlauf wirksam ist. Aus der Fig. 7 wird dazu der Mittelwert der schwingenden Kurve 3 durch einen Tiefpaß gebildet. Dieser entspricht etwa der Kurve 5 in Fig. 7, das heißt, der zeitlichen Ableitung dn/dt, die den konstanten Drehzahlhochlauf ohne Ruckeln betrifft.

Dieser Mittelwert Dnmi nach Fig. 10 wird von der Kurve 3 aus Fig. 7 abgezogen, wodurch ein dynamisch korrigierter Wert Dnd erhalten wird nach

$$Dnd(k) = Dn(k) - Dnmi(k).$$

Dieser dynamisch korrigierte Wert Dnd entsprechend der Sinuskurve 8 in Fig. 11 verläuft wiederum symmetrisch zur Zeitachse t.

Dadurch wird auch die Kennlinie gemäß Fig. 13 Symmetrisch angesteuert, wodurch auch der Zündwinkelkorrekturwert DWARA nach Fig. 12 wieder Symmetrisch zur Zeitachse t liegt. Damit ist der generelle Versatz 6 zu späten Zündwinkeln, wie er in Fig. 9 aufgetreten ist, eliminiert. Somit steht auch trotz wirksamer Gegenkopplung für die Verhinderung eines ruckelnden Drehzahlhochlaufs ein unbeschränktes Drehmoment zur Verfügung. Beim ersten Drehzahlanstieg, während dem der Mittelwert Dnmi noch nicht nachgeführt ist, wirkt zunächst die starke Zündwinkelspätzündung, was zu einem sanfteren Lastwechsel beiträgt.

Beim Stationärbetrieb ($\bar{n}$ = konstant) ergibt sich automatisch die einfache Funktion entsprechend den Fig. 1 bis 4. Alle Übergänge sind kontinuierlich ohne Drehmomentsprünge.

In Fig. 14 ist eine Kurve 9 dargestellt, die den Verlauf des Drehmoments Md in Bezug zum Zündwinkel αz darstellt. Die Kurve 9 hat ein Maximum 10, das einem Zündbestwert entspricht.

Ist nun die Vorsteuerung des Zündwinkels bzw. der Sollzündwinkel auf diesen Zündbestwert ausgelegt, so bewirkt eine Zündwinkelkorrektur in Richtung auf eine Frühzündung (+ Δαz) wiederum eine Drehmomentreduzierung, die im Gegensatz zur gewünschten Gegenkopplung hier als Mitkopplung und Verstärkung von Ruckeleffekten wirken würde.

Es kann daher unter Umständen notwendig sein, in definierten Betriebsbereichen positive Zündwinkelkorrekturwerte DWARP zu unterdrücken.

Ein entsprechendes Diagramm ist in Fig. 15 angegeben, wo die Last tL über die Drehzahl n aufgetragen ist. Eine Kurve 11 trennt einen oberen Lastbereich O von einem unteren Lastbereich U. Im oberen Lastbereich O werden nur negative Zündwinkelkorrekturwerte - Δαz zugelassen; im unteren Lastbereich U werden dagegen sowohl positive Korrekturzündwinkelwerte + Δαz und negative Werte - Δαz zugelassen.

Dies wird mit der Kennlinie nach Fig. 16 für den unteren Lastbereich U und mit der Kennlinie nach Fig. 17 für den oberen Lastbereich O erreicht, wobei hier zudem die Kennlinie für negative Zündwinkelkorrekturwerte -Δαz im oberen Lastbereich O anders gestaltet ist, als im unteren Lastbereich U, um eine ausreichende Drehmomentvariation zu erzielen.

Eine andere, etwas aufwendigere Ausführungsform wird dadurch erhalten, daß ein von der Drehzahl und der Last abhängiges Wichtungsfeld für den Zündwinkelkorrekturwert DWARA angesteuert wird, das in allen Drehzahl-Last-Punkten bei gleichem Drehzahldifferenzwert Dn die für die Gegenkopplung bestmögliche Momentendifferenz DMd gewährleistet. Als Beispiele werden hier folgende beiden Wichtungskennfelder für positive und negative Werte angegeben:

KFWARP

| tL | | | |
|---|---|---|---|
| 0 | 0 | 0 | 0 |
| 0 | 0 | 0 | 0 |
| 1 | 1 | 0 | 0 |
| 1 | 1 | 1 | 1 |

n

Wichtung für positive DWARA

KFWARN

| tL | | | |
|---|---|---|---|
| 2 | 2 | 2 | 2 |
| 2 | 2 | 2 | 2 |
| 1 | 1 | 2 | 2 |
| 1 | 1 | 1 | 1 |

n

Wichtung für negative DWARA

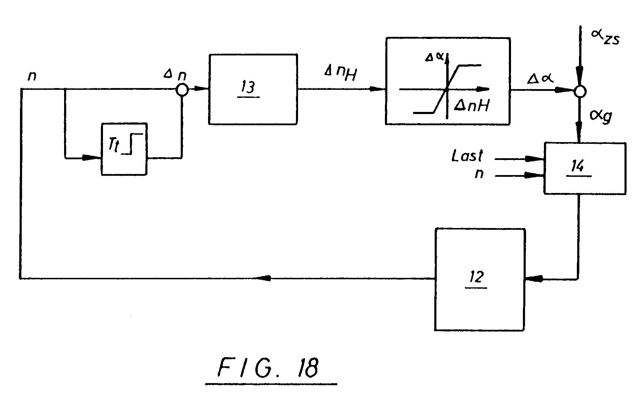

In Fig. 18 ist eine weitere Ausführungsform in einem Blockschaltbild dargestellt, mit einer Brennkraftma-

4

schine 12, an der die Drehzahl n gemessen wird und woraus eine Drehzahldifferenz Δn zwischen zwei Messungen gebildet wird, wobei Tt die Totzeit zwischen zwei Messungen bedeutet. Der Drehzahldifferenzwert Δn wird einem Hochpaß 13 zugeführt. Vom Ausgang des Hochpaßes 13 wird der hochpaßgefilterte Drehzahldifferenzwert ΔnH über die Kennlinie für einen Korrekturzündwinkel Δα bearbeitet und als Korrekturzündwinkelwert Δα mit einem vorgegebenen Sollzündwinkel αzS zu einem Gesamtzündwinkel αg summiert. Der Gesamtkorrekturzündwinkel αg wird einem Begrenzungskennfeld 14 zugeführt und nach diesem zur Steuerung an die Brennkraftmaschine 12 weitergegeben.

Bei dieser Ausführungsform wird somit die Drehzahldifferenz αn aus zwei aufeinanderfolgenden Drehzahlmessungen gebildet, wobei alternativ eine Periodendauerdifferenz möglich ist. Durch eine Hochpaßfilterung über den Hochpaß 13 wird eine konstante Drehzahländerung im Ausgangssignal ΔnH unterdrückt, so daß nur der Wechselanteil einer Ruckelschwingung sowohl bei konstanter als auch bei stetig steigender oder fallender Drehzahl zu einem Korrekturzündwinkel über die Kennlinie Δα(ΔnH) führt. Der resultierende Gesamtwinkel αg wird in seinem frühesten Wert durch das Begrenzungskennfeld 14 in Abhängigkeit der Drehzahl und Last α max (n, tL) begrenzt, indem der Zündwinkel für maximales Drehmoment abgelegt ist.

**Patentansprüche**

1. Einrichtung zum Verhindern des Ruckelns bei Kraftfahrzeugen, mit einer Drehmomentkorrektur über eine Steuerung des Zündwinkels, wobei gebildete Drehzahldifferenzwerte (Dn(k) = n(k)- n(k - 1)) bezogen auf bestimmte, aufeinanderfolgende Zeitsegmente (Tseg; Tt) bzw. Werte der zeitlichen Ableitung der Drehzahl (dn/dt) einen Wert für einen Korrekturzündwinkel (DWARA) bestimmen, der zum Zündwinkelvorsteuerwert (αzS) addiert wird, dadurch gekennzeichnet, daß der Korrekturzündwinkel (DWARA) in Abhängigkeit von Größe und Betrag der Drehzahldifferenzwerte (Dn) dergestalt über eine Kennlinie (DWARA (Dn)) gebildet ist, daß zur Verhinderung einer generellen Spätverschiebung für den Zündwinkel (αz) bei ruckelndem Drehzahlhochlauf der Mittelwert der Drehzahländerungen (Dnmi) über einen Tiefpaß gebildet wird und daß die Ädressierung der Kennlinie (DWARA (Dn)) mit einem dynamisch korrigierten Drehzahldifferenzwert (Dnd)) erfolgt, der aus der Differenz des jeweils direkt ermittelten Drehzahldifferenzwertes (Dn) und des Mittelwerts (Dnmi) gebildet ist.

2. Einrichtung zum Verhindern des Ruckelns bei Kraftfahrzeugen nach Anspruch 1, dadurch gekennzeichnet, daß eine dynamische Korrektur in der Weise durchgeführt wird, daß bei einem Drehzahlhochlauf bzw. einer konstanten Drehzahländerung die Drehzahländerung symmetrisch zu einer Zeitachse t liegt, so daß die Korrekturwerte der Korrekturzündwinkel (DWARA) symmetrisch zum Zündwinkelvorsteuerwert (αzS) liegen.

3. Einrichtung zum Verhindern des Ruckelns bei Kraftfahrzeugen nach Anspruch 1 und 2, dadurch gekennzeichnet, daß die Kennlinie (DWARA (Dn) um ihren Nullpunkt eine Kennlinienunempfindlichkeitszone aufweist, so daß bei geringen Drehzahlschwankungen keine Korrektur erfolgt und somit der Differnzier-Anteil (D-Anteil) aus der Regelung elimniert ist.

4. Einrichtung zum Verhindern des Ruckelns bei Kraftfahrzeugen nach einem der Ansprüche 1 bis 3, dadurch gekennzeichnet, daß die Kennlinie eine geneigte Gerade ist, die im zweiten und dritten Quadranten des Kennliniendiagramms (DWARA (Dn)) liegt.

5. Einrichtung zum Verhindern des Ruckelns bei Kraftfahrzeugen nach Anspruch 4, dadurch gekennzeichnet, daß in wenigstens einem vorgegebenen Betriebsbereich (O) der Brennkraftmaschine positive Korrekturzündwinkel unterdrückt werden, entsprechend einer Kennlinie, die sich nur im zweiten Quadranten des Kennliniendiagramms (Figur 17) erstreckt.

6. Einrichtung zum Verhindern des Ruckelns bei Kraftfahrzeugen nach einem der Ansprüche 1 bis 5, dadurch gekennzeichnet, daß ein Wichtungskennfeld für alle Drehzahl/Last-Punkte bzw. entsprechende Bereiche vorgegeben ist, mit dort abgelegten Wichtungsgrößen, die bei jeweils gleichem Drehzahldifferenzwert (Dn) einen bestmöglich gleichen Drehmomentdifferenzwert gewährleisten.

7. Einrichtung zuzm Verhindern des Ruckelns bei Kraftfahrzeugen nach einem der Ansprüche 1 bis 6, dadurch gekennzeichnet, daß eine Hochpaßfilterung des Drehzahldifferenzwerts (Dn) vorgenommen wird, wodurch eine konstante Drehzahländerung im Ausgangssignal für die Drehzahldifferenzwerte (Dn) unterdrückt wird.

8. Einrichtung zum Verhindern des Ruckelns bei Kraftfahrzeugen nach Anspruch 7, dadurch gekennzeichnet, daß jeweils ein Drehzahldifferenzwert (Δn) aus zwei aufeinanderfolgenden Drehzahlmessungen gebildet ist, dieser Drehzahldifferenzwert (Δn) in einem Hochpaß (13) zu einem Ausgangssignal (ΔnH) hochpaßgefiltert wird, so daß nur der Wechselanteil einer Ruckelschwingung erfaßt wird und dieses Ausgangssignal die Kennlinie (Δα(ΔnH) adressiert, worüber ein Korrekturzündwinkel (Δα) gebildet wird, dessen Wert mit einem vorgesteuerten Zündwinkelwert (αzS) zu einem resultierenden Gesamtzündwinkel (αg) summiert wird und dieser Wert für den Gesamtzündwinkel (αg) durch ein Kennfeld (14), indem der Zündwinkel für maximales Drehmoment abgelegt ist, in Abhängigkeit der Drehzahl (n) und der Last (tL) begrenzt ist.

## Claims

1. Device for preventing bucking in motor vehicles, with a torque correction via control of the ignition angle, differential speed values (Dn(k) = n(k) - n(k - 1)) formed in relation to particular successive time segments (Tseg; Tt) or values of the time derivative of the rotational speed (dn/dt) determining a value for a corrective ignition angle (DWARA) which is added to the ignition-angle precontrol value (αzs), characterised in that the corrective ignition angle (DWARA) is formed as a function of the size and sign of the differential speed values (Dn) via a characteristic curve (DWARA (Dn)) such that, to prevent a general retardation for the ignition angle (αz) in the case of a bucking speed increase, the average of the changes (Dnmi) in speed is formed via a low pass and in that the characteristic curve (DWARA (Dn)) is addressed with a dynamically corrected differential speed value (Dnd) which is formed from the difference between the in each case directly determined differential speed value (Dn) and the average (Dnmi).

2. Device for preventing bucking in motor vehicles according to Claim 1, characterised in that a dynamic correction is performed such that, in the case of a speed increase or a constant change in speed, the constant change in speed is symmetrical to a time axis t, with the result that the correction values of the corrective ignition angle (DWARA) are symmetrical to the ignition-angle precontrol value (αzS).

3. Device for preventing bucking in motor vehicles according to Claims 1 and 2, characterised in that the characteristic curve (DWARA (Dn)) has a characteristic-curve insensitivity zone around its zero point, with the result that no correction takes place in the case of small speed fluctuations and the differential component (D component) is thus eliminated from the control.

4. Device for preventing bucking in motor vehicles according to one of Claims 1 to 3, characterised in that the characteristic curve is a sloping straight line which is located in the second and third quadrants of the characteristic diagram (DWARA (Dn)).

5. Device for preventing bucking in motor vehicles according to Claim 4, characterised in that positive corrective ignition angles are suppressed in at least one predetermined operating range (O) of the internal-combustion engine, corresponding to a characteristic curve which extends only in the second quadrant of the characteristic diagram (Figure 17).

6. Device for preventing bucking in motor vehicles according to one of Claims 1 to 5, characterised in that a weighting set of characteristics for all speed/load points or corresponding ranges is predetermined, with weighting variables stored there which guarantee an optimally identical differential torque value in the case of a respectively identical differential speed value (Dn).

7. Device for preventing bucking in motor vehicles according to one of Claims 1 to 6, characterised in that a high-pass filtering of the differential speed value (Dn) is performed, a constant speed change in the output signal for the differential speed values (Dn) thereby being suppressed.

8. Device for preventing bucking in motor vehicles according to Claim 7, characterised in that in each case one differential speed value (Δn) is formed from two successive speed measurements, this differential speed value (Δn) is subjected to a high-pass filtering in a high pass (13) to give an output signal (ΔnH), with the result that only the oscillating component of a bucking vibration is detected and this output signal addresses the characteristic curve (Δα (ΔnH)), by means of which a corrective ignition angle (Δα) is formed, the value of which is summed with a precontrolled ignition-angle value (αzS) to give a resulting total ignition angle (αg) and this value for the total ignition angle (αg) is limited as a function of the speed (n) and the load (tL) by a set of characteristics (14) in which the ignition angle for maximum torque is stored.

**Revendications**

1. Installation pour éviter les secousses ou à-coups de véhicules automobiles, avec une correction de couple par la commande de l'angle d'allumage, les valeurs de différences de vitesses de rotation formées (Dn(k) = n(k)-n(k - 1), rapportées à des segments de temps déterminés, successifs (Tseg; Tt) ou des valeurs de la dérivée en fonction du temps de la vitesse de rotation (dn/dt), définissent une valeur de correction de l'angle d'allumage (DWARA), ajoutée à la valeur de commande préalable de l'angle d'allumage ($\alpha$ zS), installation caractérisée en ce que l'on forme la valeur de correction de l'angle d'allumage (DWARA) en fonction de la grandeur et de l'amplitude des valeurs de différences de vitesses de rotation (Dn) suivant une courbe caractéristique (DWARA (Dn)), et pour éviter un décalage général vers le retard de l'angle d'allumage ($\alpha$ z) lors d'une montée en vitesse de rotation avec secousses, on forme la valeur moyenne des variations de vitesse de rotation (Dnmi) par un filtre passe-bas et on adresse la courbe caractéristique (DWARA (Dn)) avec une valeur de différence de vitesses de rotation à correction dynamique (Dnd) formée à partir de la différence de la valeur de la différence de vitesse de rotation (Dn) déterminée chaque fois directement et de la valeur moyenne (Dnmi).

2. Installation pour éviter les secousses d'un véhicule automobile selon la revendication 1, caractérisée en ce qu'on effectue une correction dynamique en ce que pour une montée en vitesse de rotation ou pour une variation constante de la vitesse de rotation, la variation de vitesse de rotation est symétrique par rapport à un axe des temps (t) de façon que les valeurs de correction de l'angle d'allumage (DWARA) soient symétriques par rapport à la valeur de commande préalable de l'angle d'allumage ($\alpha$ zS).

3. Installation pour éviter les secousses de véhicules automobiles selon les revendications 1 et 2, caractérisée en ce que la courbe caractéristique (DWARA (Dn)) présente une zone d'insensibilité autour de son point zéro de façon que pour de faibles variations de la vitesse de rotation il ne se produise aucune correction et que la composante différentielle (composante D) soit éliminée de la régulation.

4. Installation pour éviter les secousses de véhicules automobiles selon l'une des revendications 1 à 3, caractérisée en ce que la courbe caractéristique est une droite inclinée située dans le second et troisième cadran du diagramme des courbes caractéristiques (DWARA (Dn)).

5. Installation pour éviter les secousses de véhicules automobiles selon la revendication 4, caractérisée en ce que dans au moins une plage de fonctionnement prédéterminée (O) du moteur à combustion interne, on élimine des valeurs positives de correction de l'angle d'allumage suivant une courbe caractéristique qui ne s'étend que dans le second cadran du diagramme des courbes caractéristiques (figure 17).

6. Installation pour éviter les secousses de véhicules automobiles selon l'une des revendications 1 à 5, caractérisée en ce qu'on prédétermine un champ de pondérations pour tous les points vitesse de rotation/charge ou les plages correspondantes avec les grandeurs de pondération, enregistrées, qui, pour chaque même valeur de différences de vitesses de rotation (Dn) donnent la meilleure valeur de différence de couple, possible.

7. Installation pour éviter les secousses de véhicules automobiles selon l'une des revendications 1 à 6, caractérisée en ce qu'on effectue un filtrage par un filtre passe-haut de la valeur de différence de la vitesse de rotation (Dn) pour éliminer toute variation constante de la vitesse de rotation dans le signal de sortie pour les valeurs de différence de vitesse de rotation (Dn).

8. Installation pour éviter les secousses de véhicules automobiles selon la revendication 7, caractérisée en ce que chaque fois on forme une valeur de différence de vitesse de rotation ($\Delta$ n) à partir de deux mesures successives de la vitesse de rotation, on filtre cette valeur de différence de vitesse de rotation ($\Delta$ n) dans un filtre passe-haut (13) pou donner un signal de sortie ($\Delta$ nH) pour ne prendre que la partie alternative d'une oscillation de secousses et ce signal de sortie est ajouté à la courbe caractéristique ($\Delta$ $\alpha$ ($\Delta$ nH), et on forme une valeur de correction de l'angle d'allumage ($\Delta$ $\alpha$) dont la valeur est ajoutée à une valeur d'angle d'allumage précommandée ($\alpha$ zS) pour donner un angle d'allumage global résultant ($\alpha$ g) et cette valeur pour l'angle d'allumage global ($\alpha$ g) est limitée en fonction de la vitesse de rotation (n) et de la charge (tL).par un champ de caractéristiques (14) dans lequel l'angle d'allumage est inscrit pour le couple maximum.

FIG.1

FIG.2

FIG.3

FIG.4

FIG.5

FIG. 8

FIG. 9

FIG. 7

FIG. 6

$F I G. 12$

$F I G. 13$

DWARA

DWARA

$D_n$

t

$D_{nmi}$

$D_{nd}$

$\delta$

$F I G. 10$

$F I G. 11$

t

t

_FIG. 14_

_FIG. 15_

_FIG. 16_

_FIG. 17_

$F I G.$ $18$